# EUROPEAN PATENT SPECIFICATION

(11) **EP 4 006 655 B1**
(45) Date of publication and mention of the grant of the patent: **07.08.2024**
(21) Application number: 20209910.7
(22) Date of filing: 25.11.2020
(51) Int. Cl.: G05B 13/02

(54) **METHOD AND DEVICE FOR FINDING BENEFICIAL PARAMETER SETTINGS OF A CONTROLLER FOR CONTROLLING AN ACTUATOR IN A HEATING OR COOLING SYSTEM**
VERFAHREN UND VORRICHTUNG ZUM AUFFINDEN GÜNSTIGER PARAMETEREINSTELLUNGEN EINES REGLERS ZUR STEUERUNG EINES AKTUATORS IN EINEM HEIZ- ODER KÜHLSYSTEM
PROCÉDÉ ET DISPOSITIF PERMETTANT DE TROUVER DES RÉGLAGES DE PARAMÈTRES UTILES D'UN ORGANE DE COMMANDE AFIN DE COMMANDER UN ACTIONNEUR DANS UN SYSTÈME DE CHAUFFAGE OU DE REFROIDISSEMENT

(43) Date of publication of application: 01.06.2022
(73) Proprietor: ESBE AB, 333 75 Reftele (SE)
(72) Inventor: GRUBER, Mattias, 331 35 Värnamo (SE); WESTERBERG, Erik, 302 24 Halmstad (SE)
(74) Representative: AWA Sweden AB

(56) References cited:
- US-A- 5 355 305
- US-B1- 8 996 141
- US-B2- 6 937 909

## Description

### FIELD OF TECHNOLOGY

The present disclosure belongs to methods and devices for finding beneficial parameter settings of a controller for controlling an actuator in a heating or cooling system.

### BACKGROUND

The purpose of a controller for controlling valve actuators in heating or cooling systems is to ensure that a desired temperature or a fluid flow of a fluid flowing in the heating or cooling system is maintained. The performance of such a controller depends on its parameter settings, thereby requiring adequate parameter settings concerning the temperature or a fluid flow. Such parameter settings generally include predefined factory parameter settings. However, factory parameter settings for such a controller oftentimes differ from the beneficial parameter settings of a controller in an actual heating or cooling system. A large difference between the factory parameter settings and the beneficial parameter settings may depend on sensor positioning, valve dimensions, system delay times, valve characteristics, or the like. Unfavorable factory parameter settings may thus result in an inadequate performance of the heating or cooling system. For instance, large differences between factory parameter settings and beneficial parameter settings of an actual heating or cooling system may cause self-oscillation of the controller resulting in an extensive wear and reduced system efficiency.

US6937909 B2 discloses a method for adjusting the gain and integral time parameters of a proportional-integral controller.

Hence, there is a need for a method for finding beneficial parameter settings of a controller for controlling an actuator connected to a valve in a heating or cooling system that overcomes unfavorable factory settings of a controller in an actual heating or cooling system.

### SUMMARY

Thus, it is an object of the invention to provide a method for finding beneficial parameter settings of a controller for controlling an actuator connected to a valve in a heating or cooling system that overcomes unfavorable factory parameter settings of a controller in an actual heating or cooling system.

The invention is defined in the appended claims.

According to first aspect of the invention, there is provided a method according to claim 1 for finding beneficial parameter settings of a controller for controlling an actuator connected to a valve in a heating or cooling system.

By allowing an activity parameter associated with the control activity level to be ongoingly reviewed and updated according to prevailing circumstances enables determining a sufficiency of present parameter settings in an actual heating or cooling system. Hence, the method includes automatically estimating and implementing beneficial parameter settings of the controller. The activity parameter associated with the control activity level is updated and possibly updated based on a detection of the control activity level. The second type of activity-parameter adjustment includes an adjustment of the activity parameter being opposed to the first type of activity-parameter adjustment. That is, provided the first type of activity-parameter adjustment being an increase of the activity parameter, the second type of activity-parameter adjustment is a decrease of the activity parameter, and vice versa. Such activity parameter adjustments may enable an improved adaptation of the activity parameter in the actual heating or cooling system, hence improving possibly poorly predefined factory parameter settings. Thus, this may prevent unfavorable factory settings and may provide a trade-off between the speed and the stability of the valve. An improved adaptation for, e.g., seasons, may thereby be achieved. The energy efficiency and the provided comfort level of the heating or cooling system may further be increased. A further advantage is that the method may enable the controller to achieve a desirable level of activity for reducing the wear of components associated with the level of activity. For instance, the wear of the valve and the actuator may be reduced. A further advantage is that the method may adapt the controller being independent of the system architecture of a heating or cooling system. The controller may also reduce a risk of extensive power peaks and comfort issues, which may occur if the level of activity of the controller is high.

The activity parameter is a scaling factor for scaling a predefined gain factor, the product of the activity parameter and the predefined gain factor being configured to be proportional to a level of change of an opening degree of the valve.

Given a detected control error, e.g., detecting a deviation between the actual and the desired temperature, a response of the heating or cooling system may be to execute a stroke change of the actuator. The magnitude of such a stroke change may be proportional to the received control error and a gain factor. The magnitude of the gain factor hence determines the magnitude of the response, given the detected control error, which may further relate to the stability of the heating or cooling system. Hence, the stability of the heating or cooling system may benefit from scaling the gain factor. Such a scaling is within this specification handled by the activity parameter. The magnitude of the activity parameter may be viewed as a temporary updating of the predefined gain factor, which may allow an adequate level of change of a stroke of the valve in prevailing circumstances. The magnitude of the activity parameter is preferably linearly proportional to how much a valve shall open up, upon receiving instructions for open up the valve, given a detected control error. "Open up" the valve generally, and also herein, refers to allowing an increased fluid flow through a certain inlet of the valve. By way of example, provided the gain factor is 1 may imply that the change of the opening degree of a valve is to be changed by 1 % given a control error of 1°C. Should the activity parameter be, e.g., 0.5 in such a situation, the corresponding change of the opening degree of the valve inlet of concern is 0.5%. The activity parameter is thus used to control the control activity level. Provided the control activity level is to be decreased, a command is executed to decrease the activity parameter. A change of the activity parameter may for instance account for season variations, system architecture or changed system conditions e.g. change of a prevailing temperature level. This may further allow the controller of the heating or cooling system to acquire suitable parameter settings, to improve possibly poorly predefined factory parameter settings or parameters settings that were beneficial during other circumstances.

The first type of activity-parameter adjustment is a decrease of the activity parameter, and the second type of activity-parameter adjustment is an increase of the activity parameter.

Thus, a decrease of the activity parameter is executed if the control activity level is above a threshold control activity level. Hence, if the control activity level is above a predetermined activity threshold value, the activity parameter is to be decreased, resulting in that, upon receiving instructions to change the opening degree of the valve given a certain control error, the change of opening degree is decreased. This applies both to when the opening degree of the valve is to be increased or decreased. Such a decrease may decrease the activity of the actuator and the valve, and may thereby reduce the wear of the actuator, the valve, or other moving parts associated with the control activity level. In absence of the decrease of the activity parameter, and thereby a decrease of the control activity level, during a first period of time, an increase of the activity parameter is executed. This may prevent the control activity level being too low, thereby enhancing the stability of the heating or cooling system. However, there may be a set of criteria for the above-mentioned increase and decrease to be executed. These criteria are further described below. In the long run, this may further reduce the wear of the actuator and the valve while maintaining a suitable gain factor of the heating or cooling system.

The detecting of the control activity level may comprise detecting a number of directional changes of the actuator per unit of time.

This provides information of how often the valve changes between opening up and closing. The activity parameter may be updated accordingly. Thus, the wear of the actuator and the valve may be reduced. This may further increase the energy efficiency and the provided comfort level of the heating or cooling system.

The method may further comprise placing an inquiry to decrease the activity parameter, provided the number of directional changes of the actuator per unit of time is above a first threshold value.

The number of directional changes of the actuator is detected during a period of time. Such a period of time may be of the order of ten minutes. The activity parameter may be adjusted accordingly, provided a set of criteria are fulfilled. For instance, the activity parameter may be decreased if the number of directional changes is above the first threshold value and the valve is not in an end position. The latter will be further described below. This may provide an improvement of a trade-off between speed and stability of the actuator, thereby increasing the energy efficiency and the provided comfort level of the heating or cooling system.

The detecting of the control activity level may comprise detecting a number of actuator movements per unit of time.

The number of actuator movements may correspond to the number of directional changes provided both are detected during the same period of time and the stroke direction of the actuator flips back and forth for each subsequent stroke change. In general, however, the number of actuator movements and the number of directional changes numbers differ. This provides information of how often the actuator changes position, regardless of possible directional changes of the actuator. The activity parameter may be updated accordingly. Thus, the wear of the actuator and the valve may be reduced while still maintaining a suitable gain. This may further increase the energy efficiency and the provided comfort level of the heating or cooling system.

The method may further comprise placing an inquiry to decrease the activity parameter, provided that the number of actuator movements is above a second threshold value.

The number of actuator movements is detected during a period of time. The activity parameter may be adjusted accordingly, provided a set of criteria are fulfilled. For instance, the activity parameter may be decreased if the number of actuator movements is above the second threshold value and the valve is not in an end position. The latter will be further described below. This may provide an improvement of a trade-off between speed and stability of the actuator, thereby increasing the energy efficiency and the provided comfort level of the heating or cooling system.

The method may further comprise decrease the activity parameter, provided the inquiry to decrease the activity parameter, based on either or both of the number of directional changes and the number of actuator movements, has been placed, and provided absence of a decrease of the activity parameter during the second period of time.

The second period of time is preferably of the order of 12 hours. This prevents an unnecessarily high control activity level, thereby reducing the wear of the actuator and the valve, as well as increasing the energy efficiency and the provided comfort level of the heating or cooling system. The number of actuator movements and/or the number of directional changes of the actuator may be evaluated periodically, wherein one period may be shorter that the second period of time. This may allow a smooth and controlled adjustment of an activity parameter associated with the level of activity of the controller, thereby enhancing stability and performance in the heating or cooling system. The activity parameter remains thereby at least slightly varying over time, and the heating or cooling system is thereby less sensitive to a possibly forthcoming dramatic change regarding the number of actuator movements and/or the number of directional changes of the actuator. Calcification of the valve may be prevented by such a forced but gentle change of the activity parameter.

The first period of time may be of the order of 24 hours.

Such a period of time may serve as a sufficient trade-off between the stability and the speed of the valve, providing to relatively fast achieve a sufficient activity parameter for the actual heating or cooling system over possibly unfavorable factory settings or parameters settings that were beneficial during other circumstances. Such a period of time is also short enough to account for possible changes of the activity parameter due to the different seasons changes over a year or other changes in system conditions.

The method may further comprise:
- reading a desired attribute of a fluid flowing in a piping system of the heating or cooling system, and
- measuring an actual attribute of the fluid, wherein the actual attribute corresponds to the desired attribute.

The desired attribute and the actual attribute of the fluid may be any suitable attribute for a fluid in heating or cooling system. This enhances flexibility of the method.

The desired attribute may be a desired temperature, and the actual attribute may be an actual temperature.

Reading a desired temperature and comparing the desired temperature to an actual temperature may efficiently enable an adequate degree of opening of the valve to achieve a substantial equilibrium between the desired and actual temperature, provided a beneficial gain factor is found.

The desired attribute may be a desired fluid flow, and the actual attribute may be an actual flow.

This enables a response of the system based on a volumetric flow of the fluid flowing in the piping system of the heating or cooling system which may increase the energy efficiency and the provided comfort level of the heating or cooling system based on the type of heating or cooling space to be heated or cooled.

The valve may be configured to be set in any one of the settings:
- a fully open position,
- a fully closed position, and
- any position between the fully open position and the fully closed position.

This may allow a precise setting of the valve to achieve the desired attribute of the fluid flowing in the piping system of the heating or cooling system.

The execution of the activity-parameter adjustment may be prevented provided the valve is in the fully open position or in the fully closed position.

Provided the attribute to be controlled is temperature, a temperature control of the heating or cooling system is thereby inactive while the valve is in an end position. If the activity parameter is to be adjusted according to the above-mentioned description, the execution of the activity-parameter adjustment may be prevented when the valve is in the fully open position. A similar reasoning applies when the valve is in the fully closed position. In such situations the method may restart. As an example, the valve may be in a completely closed position during summer if heating is considered unnecessary. If the activity parameter is adjusted in such a situation, the activity parameter would increase to its maximal value, since the control activity level in such a situation is zero, which would indicate a need for increase the activity parameter. This would cause future instability in the heating or cooling system. By preventing adjusting the activity parameter in such a situation may thereby enhance the stability of the heating or cooling system.

According to a second aspect of the invention, there is provided an electronic device comprising:
- circuitry configured to execute:
   - a control-activity-level detecting function configured to detect a control activity level of an actuator in a heating or cooling system,
   - an activity-parameter adjusting function configured to execute an activity-parameter adjustment of an activity parameter associated with the control activity level of the actuator, wherein a first type of activity-parameter adjustment is executed if the control activity level is above a threshold control activity level, and wherein a second type of activity parameter adjustment is executed, provided absence of the first type of activity-parameter adjustment during a first period of time.

The above-mentioned features of the method, when applicable, apply to this second aspect as well. In order to avoid undue repetition, reference is made to the above.

The method may further comprise setting a stroke of the actuator for approaching or maintaining the desired attribute of the fluid relative to the actual attribute of the fluid.

According to an embodiment, the fluid may be water.

Using water in the piping system of the heating or cooling system is a cheap and convenient option, reducing time and cost.

The desired temperature may be a desired supply temperature.

The actual temperature may be an actual supply temperature.

Reading the desired supply temperature and compare the desired supply temperature to the measured actual supply temperature efficiently enables an extent of opening of the valve, to quickly achieve a substantial equilibrium between the desired and actual temperature, provided a beneficial gain factor. Such a reading and measuring may further enhance determining the gain factor to improve a response from the controller.

Generally, all terms used in the claims are to be interpreted according to their ordinary meaning in the technical field, unless explicitly defined otherwise herein. All references to "a/an/the [element, device, component, means, step, etc.]" are to be interpreted openly as referring to at least one instance of said element, device, component, means, step, etc., unless explicitly stated otherwise. The steps of any method disclosed herein do not have to be performed in the exact order disclosed, unless explicitly stated.

### BRIEF DESCRIPTION OF THE DRAWINGS

The above, as well as additional objects, features and advantages of the present invention, will be better understood through the following illustrative and non-limiting detailed description of preferred embodiments, with reference to the appended drawings, where the same reference numerals will be used for similar elements, wherein:
Fig. 1 schematically shows a flow chart of an example of the disclosed method.
Fig. 2 shows a working process of example embodiments of the method.
Fig. 3A shows, highly schematically, a valve, a difference of a degree of opening of such valve, and how an activity parameter relates to such a difference.
Fig. 3B shows, highly schematically, a fully open position and a fully closed position of the valve.
Fig. 4 schematically shows an electronic device on which the method may be implemented.

### DETAILED DESCRIPTION

The present invention will now be described more fully hereinafter with reference to the accompanying drawings, in which currently preferred embodiments of the invention are shown. This invention may, however, be embodied in many different forms and should not be construed as limited to the embodiments set forth herein; rather, these embodiments are provided for thoroughness and completeness, and to fully convey the scope of the invention to the skilled person.

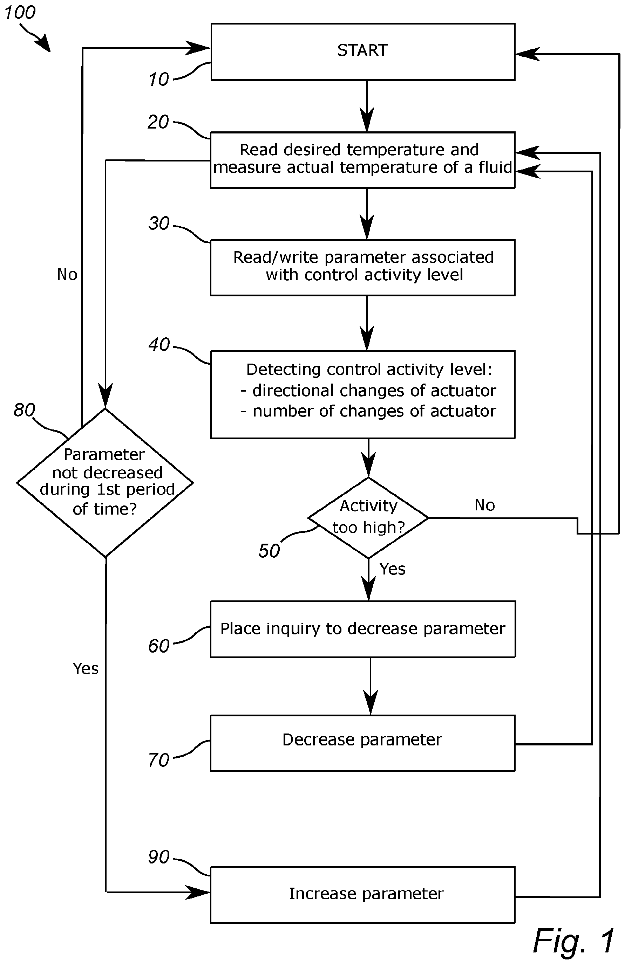

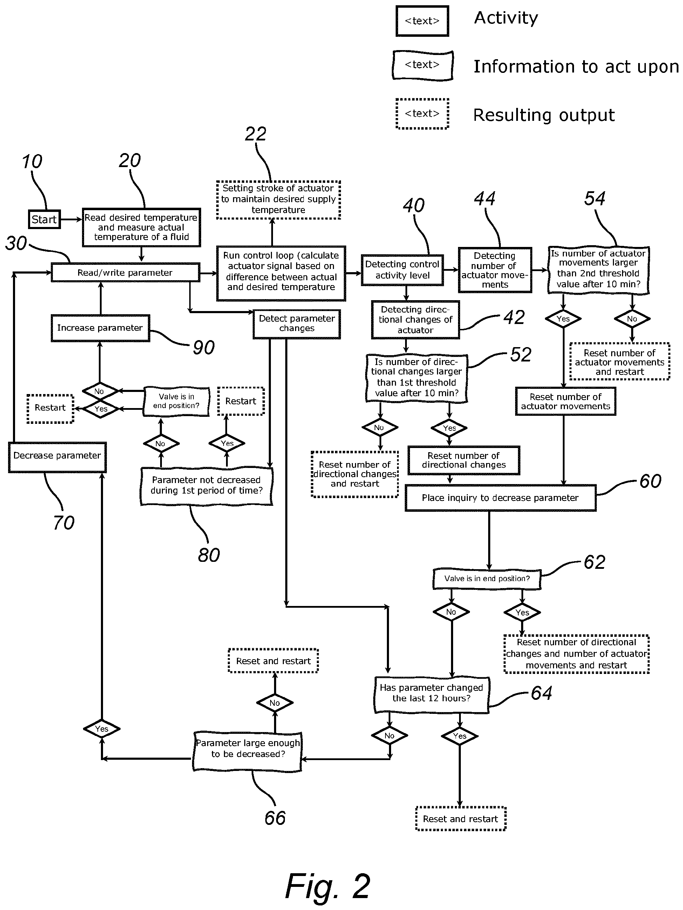

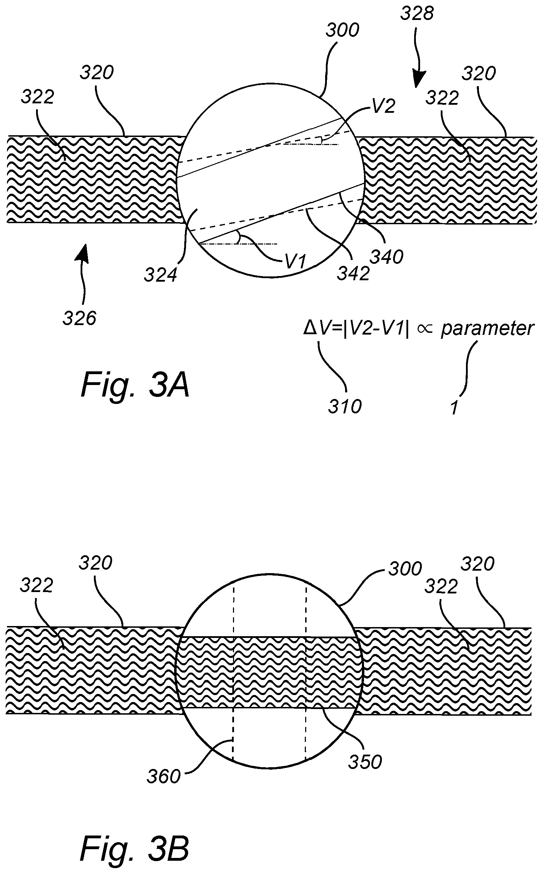

To simplify the presentation, Fig. 1 shows a flow chart 100 of the method, whereas Fig. 2 discloses a flow chart of the method including further details and example embodiments. Thus, reference is made to Fig. 1 and Fig. 2 interchangeably throughout the disclosure of the method. Slightly differing wording may occasionally be used in Fig. 1 and Fig. 2. For instance, the "activity parameter" discussed in the present specification may simply be denoted "parameter" in the drawings to save space. However, such a slightly differing wording should by no means cause confusion for a person skilled in the field. The method 100 repeatedly refers to a valve 300. Such a valve 300 and different positions 340;350;360 of the valve are shown, highly schematically, in Fig. 3.

The heating or cooling system under consideration may be a P-, PI- or PID-regulated system comprising at least a proportional control part, i.e., a received control error may have a certain linear relationship to the level of change of a stroke of the actuator. Given a certain control error, a response of the actuator may depend on the magnitude of the control error and a so-called gain factor. By way of example, if a thermostat detects a control error of +1°C, e.g., if an actual temperature is 1°C above a desired temperature, the actuator may receive instructions from the controller to execute a level of change of the stroke of the actuator. The gain factor determines such a level of change, such that the response may be a stroke change to decrease an opening degree of a valve connected to the actuator. A larger gain factor hence implies a more extensive change of the stroke of the actuator, and thereby a more extensive change of the opening degree of the valve.

Having such a P-regulated system in mind may further simplify the forthcoming specification. Although a P-regulated system is considered herein, describing a proportional control term, a person skilled in the field realizes that the invention may have a similar influence on other controller types with e.g., integral- and/or derivative control actions..

Fig. 1 schematically shows a flow chart of a method 100 for finding beneficial parameter settings of a controller for controlling an actuator connected to a valve 300 in a heating or cooling system. The flow chart 100 comprises a method cycle comprising a number of controlled criteria, either or both shown in Figs 1-2 and described in the text below. A method cycle time may be one second. Such a short method cycle time may be sufficient for detecting every single actuator movement. The method cycle time may depend on the space to be heated or cooled by the heating or cooling system. If a restart is required by means of, e.g., a criterium not being fulfilled, the method cycle may restart at step 10 in the flow chart.

The method 100 comprises a starting position 10. The starting position 10 indicates a start of the method 100. The method 100 may restart at the starting position 10 every second, such that a method cycle time is one second. Other method cycle times are equally possible. For instance, the method may restart at the starting position 10 every minute. Should a criterium of the method not being fulfilled, the method 100 may restart at the starting position 10. Examples of two such criteria 50;90 are shown in Fig. 1 and will be further described below.

The method 100 may comprise reading 20 a desired attribute of a fluid 322 flowing in a piping system 320 of the heating or cooling system, and measuring an actual attribute of the fluid 322, wherein the actual attribute corresponds to the desired attribute. Hence, the desired attribute is a similar physical quantity as the actual attribute. The measuring of the actual attribute and the reading of the desired attribute may be done substantially simultaneously. The desired attribute may be provided by a user. The desired attribute may be a desired temperature. Accordingly, the actual attribute may be an actual temperature. A desired/actual temperature may refer to a temperature of a space to be heated or cooled by the heating or cooling system. The space may be a room, an office, a space in a warehouse, or the like. The desired attribute may be a desired supply temperature of the fluid 322 flowing in the piping system 320 of the heating or cooling system. Accordingly, the actual attribute may be an actual supply temperature of the fluid flowing in the piping system of the heating or cooling system. Other actual attributes and desired attributes are possible.

For a substantial difference between the desired supply temperature and the actual supply temperature an opening degree V1 of the valve is adjusted accordingly to decrease the substantial difference; see Fig. 3. The magnitude of the adjustment 310 of the valve 300 may be controlled by an activity parameter 1 associated with the control activity level of the valve, upon execution of such an adjustment. The "activity parameter" 1 may occasionally be denoted "control activity level parameter", or, as shown in some of the appended drawings, simply "parameter".

The method 100 may comprise reading and writing 30 an activity parameter 1 associated with a control activity level. The activity parameter 1 is proportional to a level of change 410 of an opening degree of the valve; see Fig. 3. Thus, the activity parameter determines a change of a degree of opening of the valve upon receiving instructions to adjust the stroke of the valve. That is, the activity parameter may be linearly proportional to an increase or decrease of degree of opening of the valve, given a certain control error.

By way of example, the gain factor may, e.g., assume values between 0 and 10. The activity parameter may assume values between 0 and 1. Other ranges are equally possible. The activity parameter, once multiplied by the gain factor, hence is proportional to the control activity level. Thus, if the control activity level is to be decreased, a command is executed to decrease the activity parameter. The gain factor may be discretely split up in equal intervals, each interval being 0.1 units. That is, upon adjusting the activity parameter "one step" in such a situation means adjusting the updated gain factor by 0.1. Hence, provided the gain factor is 10, a one-step decrease of the activity parameter means that the gain factor is updated to an updated gain factor being 9.9.

The activity parameter may in a non-limiting way be configured to be inversely proportional to an increasing of the opening degree of the valve, upon receiving instructions for opening up the valve. Other inverse relationships between the activity parameter and the change of the opening degree upon execution are equally possible. For example, a quadratic, cubic, quartic, inversely quadratic, inversely cubic or inversely quartic relationships are possible.

The method 100 may comprise detecting 40 a number of directional changes of the actuator 42 per unit of time and/or detecting a number of actuator movements 44 per unit of time. The detection 40 may proceed ongoingly and may perform an evaluation of the control activity level periodically. The evaluation may be done after an evaluation-period of time. One such evaluation-period of time may be of the order of ten minutes. Other adequate evaluation-periods of time are equally possible.

The method 100 may comprise rising an issue by a criterium 50 regarding the control activity level. The control activity level may comprise either or both of the number of directional changes of the actuator per unit of time and the number of actuator movements per unit of time. The criterium 50 may be a criterium for determining whether either or both of the number of directional changes 52 and the number of actuator movements 54 per unit of time is above a respective threshold value. The number of directional changes is associated with a first threshold value, wherein the first threshold value is a maximal value of the number of directional changes that are allowed during a unit of time. Analogously, the number of actuator movements is associated with a second threshold value, wherein the second threshold value is a maximal value of the number of actuator movements that are allowed during a unit of time. The unit of time may be 10 minutes. However, the unit of time may be any suitable period of time. The first threshold value and the second threshold value may be similar. The first threshold value and the second threshold value may be different.

If the number of directional changes is below the first threshold value after the unit of time, step 52, the method cycle may restart at 10 after resetting the number of directional changes. If the number of actuator movements is below the second threshold value after the unit of time, step 54, the method cycle may restart at 10 after resetting the number of actuator movements. The first threshold value may be between 20-100 directional changes per hour. The second threshold value may be between 20-100 movements per hour.

The method 100 may comprise placing an inquiry 60 to decrease the activity parameter. Such an inquiry may be placed if the number of directional changes of the actuator per unit of time is above the first threshold value. That is, if the answer to criterium 50;52 is yes. Such an inquiry 60 may be placed if the number of actuator movements per unit of time is above the second threshold value. That is, if the answer to criterium 50;54 is yes. The unit of time may, again, be 10 minutes.

If the number of directional changes of the actuator is above the first threshold value, the inquiry 60 may be placed to decrease the activity parameter 1. If the number of actuator movements is above the first threshold value, the inquiry 60 may be placed to decrease the activity parameter 1. Both the number of directional changes of the actuator and the number of movements may, per unit of time, simultaneously exceed respective threshold value. In such a situation, the inquiry 60 may be placed to decrease the activity parameter 1.

Although an inquiry 60 may have been placed to decrease the activity parameter 1, a decrease of the activity parameter 1 may be prevented by a valve position criterium between process step 60 and 70 of Fig. 1, i.e., step 62 in Fig.2. Should any one of the number of directional changes and the number movements be equal to, or above respective threshold value, and the valve is in an end position 350;360, the method 100 may start over at process step 10. An end position 350;360 of the valve 300 is either a fully open position 350 or a fully closed position 360; see Fig. 3B. The valve 300 may be configured to be set in any one of the settings, a fully open position 350, a fully closed position 360, and any position 340 between the fully open position and the fully closed position. The above-mentioned valve positions are schematically shown in Fig. 3A and Fig. 3B.

Provided the attribute to be controlled is temperature, a temperature control of the heating or cooling system may thereby be inactive while the valve is in an end position 350;360. If the activity parameter 1 is to be adjusted according to the above-mentioned description, the execution of the adjustment of the activity parameter 1 may be prevented if the valve is in the fully open position 350. A similar reasoning applies if the valve 300 is in the fully closed position 360. In such situations the method may restart at 10 after resetting the number of directional changes and the number of actuator movements. As an example, the valve 300 may be in a fully closed position 360 during summer if heating of a space to be heated may be considered unnecessary. If the activity parameter 1 is adjusted in such a situation, the activity parameter 1 would increase to its maximal allowed value, since the control activity level in such a situation is zero, which would indicate a need for increase the activity parameter 1.

Proceeding to process step 70 in Figs 1 and 2 may further be prevented by a second subsequent criterium 64 between process step 60 and 70. Such a second subsequent criterium 64 may regard whether the activity parameter has been increased or not during the second period of time. The second period of time may be 12 hours. Other suitable values of the second period of time are equally plausible. Preferably, the second period of time is shorter than the first period of time. If the activity parameter has been increased during the second period of time, the method 100 may restart at process step 10 after resetting the number of directional changes and the number of actuator movements.

Proceeding to process step 70 may further be prevented by a third subsequent criterium 66 between process step 60 and 70. Such a third subsequent criterium 66 may regard whether the activity parameter is larger than an activity parameter threshold value or not. Such an activity parameter threshold value may be close to zero. The activity parameter threshold value may be zero. A decrease of the activity parameter 1 may in such a situation be impossible. If the activity parameter is smaller than the activity parameter threshold value, the method 100 may restart at process step 10 after resetting the number of directional changes and the number of actuator movements. Thus, if the activity parameter is zero, the method 100 may restart at process step 10 after resetting the number of directional changes and the number of actuator movements.

Provided the activity parameter 1 is above the activity parameter threshold value, the method 100 may proceed to process step 70. At process step 70 the inquiry 60 of decrease the activity parameter may be approved. Thus, the activity parameter may be decreased at process step 70. The activity parameter 1 may be decreased one step. Herein, one step corresponds to a change of the gain factor by 0.1. Again, the range of the values of the gain factor may be between 0 and 10, wherein a scaling of the gain factor, by the activity parameter, may be such that the gain factor is scaled in steps of 0.1. One such interval is herein referred to as one step. Once such a one-step decrease has been executed, the method 100 may proceed to process step 20. Alternatively, the method 100 may proceed to step 10 or 30.

As described above, the method 100 may not reach processing step 60 in the flow chart 100 during the second period of time. In such a situation there may be a redundancy in decreasing the activity parameter. However, in parallel to the process steps 30-70 there is an ongoing review of a change of the activity parameter. At process step 80, a reviewing issue 80 may be raised regarding whether or not the activity parameter has been decreased during the first period of time. That is, the reviewing issue 80 may concern whether process step 70 has been executed during the first period of time. If the activity parameter 1 has not been decreased during the first period of time, the activity parameter may be increased, provided, yet again, the valve is not in an end position. That is, an adjustment of the activity parameter 1 may be prevented provided the valve 300 is in the fully open position 350 or in the fully closed position 360. Should the valve be in any one of the fully open position 350 and the fully closed position 360, the activity parameter 1 may be left unaltered, and the method 100 may subsequently restart at 10. The increase of the activity parameter 1 may be one step. One step may be defined as described above. One step may be defined differently than described above, depending on the architecture of the heating or cooling system. After the increase of the activity parameter 1 the method 100 may proceed to process step 20 with the updated activity parameter. Alternatively, the method may proceed to step 10 or 30.

The method 100 may further comprise, after the reading 20 of the desired attribute of the fluid 322 and measuring the actual attribute of the fluid, setting a stroke of the actuator for approaching or maintaining the desired attribute of the fluid relative to the actual attribute of the fluid 22. Such a setting of the stroke of the actuator 22 may be directly or indirectly associated with a moving of the valve 300. A moving of the valve 300 may be directly or indirectly associated with a fluid flow of the fluid 322 flowing in the piping system 320 of the heating or cooling system. A fully open position 350 of the valve 300 may allow a maximal volumetric velocity of the fluid 322 flowing through the valve 300. A fully closed position 360 of the valve 300 allows for a minimal volumetric velocity of the fluid 322 flowing through the valve 300. Such a minimal volumetric velocity may be essentially zero liters per minute of the fluid 322 flowing through a geometrical cross-sectional area of a pipe 320 associated with the valve 300. A fully open position 350 of the valve 300 may include a substantially fully open position. That is, for instance, if the valve 300 is open to such an extent that a volumetric velocity of the fluid 322 flowing through the valve 300 is equal to, or above 95% of the maximal volumetric velocity of the fluid 322, the valve 300 may be considered fully open. A similar reasoning may be applied for the fully closed position 360. That is, for instance, if the valve 300 is closed to such an extent that a volumetric velocity of the fluid flowing through the valve is equal to, or below 5% of the maximal volumetric velocity of the fluid flowing through the valve 300, the valve may be considered fully closed.

The fluid 322 flowing through the piping system 320 of the heating or cooling system may be water. However, any suitable fluid 322 medium may be possible to use in the piping system 320 of the heating or cooling system.

As partly described above and further described below, Fig. 3A and Fig. 3B, highly schematically, shows a valve 300 installed in a piping system 322. The valve 300 is here displayed being a 2-way rotary valve 300. However, the method 100 may be applied to any adequate valve type, e.g., a 3-way valve, or the like. Fluid 322 flowing in the piping system 320 may flow from a first side 326 of the valve 300 to a second side 328 of the valve 300. Provided the valve 300 is in an open position 340, such as shown in Fig. 3A, the fluid 322 passes the valve in a flow channel 324 of the valve 300. To avoid cluttering in Fig. 3A, fluid 322 is absent in the flow channel 324. The valve 300 being in a first position 340 has a first opening degree V1. The valve 300 being in a second position 342, i.e., the dashed lines in Fig. 3A, has a second opening degree V2. A stroke difference 310 of the valve 300 between the first opening degree V1 and the second opening degree V2 may be proportional to the activity parameter 1, provided a linear dependency between the stroke difference 310 of the valve 300 and the activity parameter 1. The stroke difference 310 is occasionally denoted a change of degree of opening of the valve above. As described previously, there may be other relationships between the activity parameter 1 and the stroke difference 310 of the valve 300, such as a quadratic relationship, an inverse relationship, or the like.

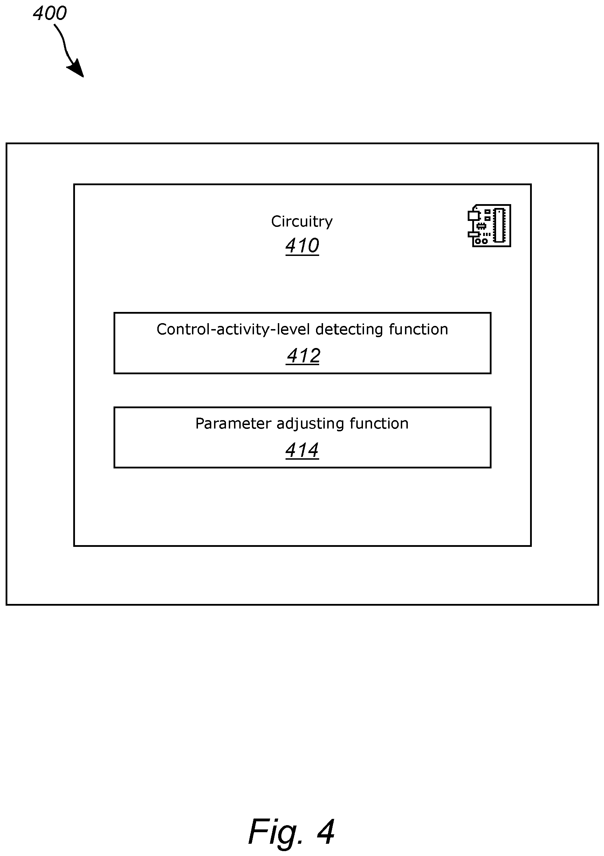

In connection with Fig. 4 there is shown a highly schematic drawing of an electronic device on which the method 100 may be implemented. The disclosed method may be implemented on a non-transitory computer-readable storage medium having stored thereon program code portions and executed on a device having processing capabilities. For the purpose of the disclosure, such a device may be a controller 400 with a certain control activity level. Any suitable electronic device 400 is possible. The controller 400 may be retrofitted in a conventional heating or cooling system. The controller 400 may comprise circuitry 410 configured to execute a control-activity-level detecting function 412 configured to detecting a control activity level of a valve 400 in a heating or cooling system, and an activity parameter adjusting function 414 configured to execute an activity parameter adjustment of the activity parameter 1 associated with the control activity level of the valve 400, wherein a first type of activity parameter adjustment is executed if the control activity level is above a threshold control activity level, and wherein a second type of activity parameter adjustment is executed, provided absence of the first type of activity parameter adjustment during a first period of time. A schematic drawing of the electronic device 400 is displayed in.

The heating or cooling system may be installed in a domestic home, a room in a home, a factory, an office, a grocery store, or the like. The heating or cooling may comprise actuator connected to the controller, and a valve connected to the actuator. The valve 300 may control a flow of a fluid 322 flowing in a piping system 320 of the heating or cooling system. The valve 300 may adopt any one of the settings: a fully open position 350, a fully closed position 360; and any position 340 between the fully open position 350 and the fully closed position 360.

The heating or cooling system may further comprise a clock for determining elapsed time between different steps or criteria of the method.

The heating or cooling system may further comprise a temperature sensor. The temperature sensor may measure an actual supply temperature of the fluid flowing in the piping system. The temperature sensor may measure other actual temperatures associated with the piping system 320 of the heating or cooling system, such as the actual temperature of a space to be heated or cooled. The space may be a domestic home, a room in a home, a factory, an office, a grocery store, etc.

The person skilled in the art realizes that the present invention by no means is limited to the preferred embodiments described above. On the contrary, many modifications and variations are possible within the scope of the appended claims.

For example, the teachings of the present disclosure may equally well be applied to a 3-way valve for mixing a warm and a cold fluid flow to achieve a given temperature of a mixed fluid flow leaving such a valve.

Additionally, variations to the disclosed embodiments can be understood and effected by the skilled person in practicing the claimed invention, from a study of the drawings, the disclosure, and the appended claims.

## Claims

1. A method for finding beneficial parameter settings of a controller for controlling an actuator connected to a valve (300) in a heating or cooling system, the method comprising:
- detecting (40) a control activity level of the actuator of the heating or cooling system, and
- executing an activity-parameter adjustment of an activity parameter (1) associated with the control activity level of the actuator, wherein a first type of activity-parameter adjustment is executed if the control activity level is above a threshold control activity level, and wherein a second type of activity-parameter adjustment is executed, provided absence of the first type of activity-parameter adjustment during a first period of time,
wherein the activity parameter (1) is a scaling factor for scaling a predetermined gain factor wherein the product of the activity parameter (1) and the predetermined gain factor is proportional to a level of change of an opening degree (V1;V2) of the valve (300), and
wherein the first type of activity-parameter adjustment is a decrease (70) of the activity parameter (1), and the second type of activity parameter-adjustment is an increase (90) of the activity parameter (1).

2. The method of claim 1, wherein the detecting (40) of the control activity level comprises:
- detecting a number of directional changes (42) of the actuator per unit of time.

3. The method of claim 1 or 2, further comprising:
- placing an inquiry (60) to decrease the activity parameter, provided the number of directional changes (42) of the actuator per unit of time is above a first threshold value.

4. The method of any one of claims 1-3, wherein the detecting (40) of the control activity level comprises:
- detecting a number of actuator movements (44) per unit of time.

5. The method of any one of claims 2-4, further comprising:
- placing an inquiry to decrease the activity parameter (60), provided that the number of actuator movements (44) is above a second threshold value.

6. The method of claim 3 or 5, further comprising:
- decrease (70) the activity parameter (1), provided the inquiry to decrease the activity parameter (60), based on either or both of the number of directional changes (42) and the number of actuator movements (44), has been placed, and provided absence of a decrease (90) of the activity parameter (1) during a second period of time.

7. The method of claim 1, wherein the first period of time is 24 hours.

8. The method of claim 1, comprising:
- reading (20) a desired attribute of a fluid (322) flowing in a piping system (320) of the heating or cooling system, and
- measuring (20) an actual attribute of the fluid (322), wherein the actual attribute corresponds to the desired attribute.

9. The method of claim 8, wherein the desired attribute is a desired temperature, and the actual attribute is an actual temperature.

10. The method of claim 8 wherein the desired attribute is a desired fluid flow, and the actual attribute is an actual fluid flow.

11. The method of any one of claims 1-10, wherein the valve is configured to be set in any one of the settings:
- a fully open position (350),
- a fully closed position (360), and
- any position (340) between the fully open position and the fully closed position.

12. The method of any one of claims 1-11, wherein said executing the adjustment of the activity parameter (1) is prevented provided the valve (300) is in the fully open position (350) or in the fully closed position (360).

13. An electronic device (400) comprising:
- circuitry (410) configured to execute:
- a control-activity-level detecting function (412) configured to detect a control activity level of a valve in a heating or cooling system, and
- an activity-parameter adjusting function (414) configured to execute an activity-parameter adjustment of an activity parameter (1) associated with the control activity level of the actuator, wherein a first type of activity-parameter adjustment is executed if the control activity level is above a threshold control activity level, and wherein a second type of activity parameter adjustment is executed, provided absence of the first type of activity-parameter adjustment during a first period of time,
wherein the activity parameter (1) is a scaling factor for scaling a predetermined gain factor wherein the product of the activity parameter (1) and the predetermined gain factor is proportional to a level of change of an opening degree (V1;V2) of the valve (300), and
wherein the first type of activity-parameter adjustment is a decrease (70) of the activity parameter (1), and the second type of activity-parameter adjustment is an increase (90) of the activity parameter (1).

## Patentansprüche

1. Verfahren zum Auffinden von vorteilhaften Parametereinstellungen eines Steuergeräts zum Steuern eines mit einem Ventil (300) in einem Heiz- oder Kühlsystem verbundenen Aktuators, wobei das Verfahren Folgendes umfasst:
- Erfassen (40) eines Steueraktivitätsniveaus des Aktuators des Heiz- oder Kühlsystems, und
- Durchführen einer Aktivitätsparameter-Einstellung eines dem Steueraktivitätsniveau des Aktuators zugeordneten Aktivitätsparameters (1), wobei ein erster Typ von Aktivitätsparameter-Einstellung ausgeführt wird, wenn das Steueraktivitätsniveau über einer Schwelle für das Steueraktivitätsniveau liegt, und wobei ein zweiter Typ von Aktivitätsparameter-Einstellung ausgeführt wird, wenn kein erster Typ von Aktivitätsparameter-Einstellung während einer ersten Zeitperiode vorliegt,
wobei der Aktivitätsparameter (1) ein Skalierfaktor zum Skalieren eines vorbestimmten Verstärkungsfaktors ist, wobei das Produkt des Aktivitätsparameters (1) und des vorbestimmten Verstärkungsfaktors proportional einem Änderungsbetrag eines Öffnungsgrads (V1; V2) des Ventils (300) ist, und
wobei der erste Typ von Aktivitätsparameter-Einstellung einer Verkleinerung (70) des Aktivitätsparameters (1) entspricht, und der zweite Typ von Aktivitätsparameter- Einstellung einer Vergrößerung (90) des Aktivitätsparameters (1) entspricht.

2. Verfahren nach Anspruch 1, wobei das Erfassen (40) des Steueraktivitätsniveaus Folgendes umfasst:
- Erfassen einer Zahl von Richtungsänderungen (42) des Aktuators pro Zeiteinheit.

3. Verfahren nach Anspruch 1 oder 2, das ferner Folgendes umfasst:
- Stellen einer Anforderung (60) auf eine Verkleinerung des Aktivitätsparameters, wenn die Zahl von Richtungsänderungen (42) des Aktuators pro Zeiteinheit über einem ersten Schwellenwert liegt.

4. Verfahren nach einem der Ansprüche 1 bis 3, wobei das Erfassen (40) des Steueraktivitätsniveaus Folgendes umfasst:
- Erfassen einer Zahl von Aktuatorbewegungen (44) pro Zeiteinheit.

5. Verfahren nach einem der Ansprüche 2 bis 4, das ferner Folgendes umfasst:
- Stellen einer Anforderung auf eine Verkleinerung des Aktivitätsparameters (60), wenn die Zahl von Aktuatorbewegungen (44) über einem zweiten Schwellenwert liegt.

6. Verfahren nach Anspruch 3 oder 5, das ferner Folgendes umfasst:
- Verkleinern (70) des Aktivitätsparameters (1), wenn die Anforderung auf eine Verkleinerung des Aktivitätsparameters (60) auf Basis von einer oder beiden der Zahl von Richtungsänderungen (42) und der Zahl von Aktuatorbewegungen (44) gestellt worden ist, und wenn keine Verkleinerung (90) des Aktivitätsparameters (1) während einer zweiten Zeitperiode vorliegt.

7. Verfahren nach Anspruch 1, wobei die erste Zeitperiode 24 Stunden beträgt.

8. Verfahren nach Anspruch 1, das Folgendes umfasst:
- Einlesen (20) eines Soll-Attributs eines in einem Rohrsystem (320) des Heiz- oder Kühlsystems strömenden Fluids (322), und
- Messen (20) eines Ist-Attributs des Fluids (322), wobei das Ist-Attribut dem Soll-Attribut entspricht.

9. Verfahren nach Anspruch 8, wobei das Soll-Attribut eine Soll-Temperatur ist, und das Ist-Attribut eine Soll-Temperatur ist.

10. Verfahren nach Anspruch 8, wobei das Soll-Attribut eine Soll-Fluidströmung ist, und das Ist-Attribut eine Ist-Fluidströmung ist.

11. Verfahren nach einem der Ansprüche 1 bis 10, wobei das Ventil konfiguriert ist, auf die folgenden Einstellungen eingestellt zu werden:
- eine vollständig offene Position (350),
- eine vollständig geschlossene Position (360) und
- jegliche Position (340) zwischen der vollständig offenen Position und der vollständig geschlossenen Position.

12. Verfahren nach einem der Ansprüche 1 bis 11, wobei das Durchführen der Einstellung des Aktivitätsparameters (1) verhindert wird, falls das Ventil (300) sich in der vollständig offenen Position (350) oder in der vollständig geschlossenen Position (360) befindet.

13. Elektronische Vorrichtung (400), die Folgendes umfasst:
- einen Schaltkreis (410), der konfiguriert ist, Folgendes durchzuführen :
- eine Funktion (412) zum Erfassen des Steueraktivitätsniveaus, die konfiguriert ist, ein Steueraktivitätsniveau eines Ventils in einem Heiz- oder Kühlsystem zu erfassen, und
- eine Funktion (414) zum Einstellen eines Aktivitätsparameters, die konfiguriert ist, eine Aktivitätsparameter-Einstellung eines dem Steueraktivitätsniveau des Aktuators zugeordneten Aktivitätsparameters (1) durchzuführen, wobei ein erster Typ von Aktivitätsparameter-Einstellung ausgeführt wird, wenn das Steueraktivitätsniveau über einer Schwelle für das Steueraktivitätsniveau liegt, und wobei ein zweiter Typ von Aktivitätsparameter-Einstellung ausgeführt wird, wenn kein erster Typ von Aktivitätsparameter-Einstellung während einer ersten Zeitperiode vorliegt,
wobei der Aktivitätsparameter (1) ein Skalierfaktor zum Skalieren eines vorbestimmten Verstärkungsfaktors ist, wobei das Produkt des Aktivitätsparameters (1) und des vorbestimmten Verstärkungsfaktors proportional einem Änderungsbetrag eines Öffnungsgrads (V1; V2) des Ventils (300) ist, und
wobei der erste Typ von Aktivitätsparameter-Einstellung einer Verkleinerung (70) des Aktivitätsparameters (1) entspricht, und der zweite Typ von Aktivitätsparameter-Einstellung einer Vergrößerung (90) des Aktivitätsparameters (1) entspricht.

## Revendications

1. Procédé permettant de trouver des réglages de paramètres utiles d'un moyen de commande destiné à commander un actionneur relié à une soupape (300) dans un système de chauffage ou de refroidissement, le procédé comprenant :
- la détection (40) d'un niveau d'activité de commande de l'actionneur du système de chauffage ou de refroidissement, et
- l'exécution d'un ajustement de paramètre d'activité d'un paramètre d'activité (1) associé au niveau d'activité de commande de l'actionneur, dans lequel un premier type d'ajustement de paramètre d'activité est exécuté si le niveau d'activité de commande est au-dessus d'un niveau seuil d'activité de commande, et dans lequel un deuxième type d'ajustement de paramètre d'activité est exécuté, en l'absence du premier type d'ajustement de paramètre d'activité pendant une première durée,
dans lequel le paramètre d'activité (1) est un facteur d'échelle pour la mise à l'échelle d'un facteur de gain prédéterminé où le produit du paramètre d'activité (1) et le facteur de gain prédéterminé est proportionnel à un niveau de changement d'un degré d'ouverture (V1 ; V2) de la soupape (300), et
dans lequel le premier type d'ajustement de paramètre d'activité est une diminution (70) du paramètre d'activité (1), et le deuxième type d'ajustement de paramètre d'activité est une augmentation (90) du paramètre d'activité (1).

2. Procédé selon la revendication 1, dans lequel la détection (40) du niveau d'activité de commande comprend :
- la détection d'un nombre de changements directionnels (42) de l'axe central de rotation par unité de temps.

3. Procédé selon la revendication 1 ou 2, comprenant en outre :
- l'envoi d'une demande (60) pour la diminution du paramètre d'activité, à condition que le nombre de changements directionnels (42) de l'actionneur par unité de temps soit au-dessus d'une première valeur seuil.

4. Procédé selon l'une quelconque des revendications 1 à 3, dans lequel la détection (40) du niveau d'activité de commande comprend :
- la détection d'un nombre de déplacements d'actionneur (44) par unité de temps.

5. Procédé selon l'une quelconque des revendications 2 à 4, comprenant en outre :
- l'envoi d'une demande pour l'augmentation du paramètre d'activité (60), à condition que le nombre de déplacements d'actionneur (44) soit au-dessus d'une deuxième valeur seuil.

6. Procédé selon la revendication 3 ou 5, comprenant en outre :
- la diminution (70) du paramètre d'activité (1), à condition que la demande de diminution du paramètre d'activité (60), basée sur l'un ou les deux parmi le nombre de changements directionnels (42) et le nombre de déplacements d'actionneur (44), ait été envoyée, et en l'absence d'une diminution (90) du paramètre d'activité (1) pendant une deuxième durée.

7. Procédé selon la revendication 1, dans lequel la première durée est de 24 heures.

8. Procédé selon la revendication 1, comprenant :
- la lecture (20) d'une propriété souhaitée d'un fluide (322) s'écoulant dans un système de conduit (320) du système de chauffage ou de refroidissement, et
- la mesure (20) d'une propriété réelle du fluide (322), dans lequel la propriété réelle correspond à la propriété souhaitée.

9. Procédé selon la revendication 8, dans lequel la propriété souhaitée est une température souhaitée, et la propriété réelle est une température réelle.

10. Procédé selon la revendication 8, dans lequel la propriété souhaitée est un écoulement de fluide souhaité, et la propriété réelle est un écoulement de fluide réel.

11. Procédé selon l'une quelconque des revendications 1 à 10, dans lequel la soupape est configurée pour être réglée selon l'un quelconque des réglages suivants :
- une position entièrement ouverte (350),
- une position entièrement fermée (360), et
- n'importe quelle position (340) entre la position entièrement ouverte et la position entièrement fermée.

12. Procédé selon l'une quelconque des revendications 1 à 11, dans lequel ladite exécution de l'ajustement du paramètre d'activité (1) est empêchée à condition que la soupape (300) est dans la position entièrement ouverte (350) ou dans la position entièrement fermée (360).

13. Dispositif électronique (400) comprenant :
- un circuit (410) configuré pour exécuter :
- une fonction de détection d'activité de commande (412) configurée pour détecter un niveau d'activité de commande d'une soupape dans un système de chauffage ou de refroidissement, et
- une fonction d'ajustement de paramètre d'activité (414) configuré pour exécuter un ajustement de paramètre d'activité d'un paramètre d'activité (1) associé au niveau d'activité de commande de l'actionneur, dans lequel un premier type d'ajustement de paramètre d'activité est exécuté si le niveau d'activité de commande est au-dessus d'un niveau seuil d'activité de commande, et dans lequel un deuxième type d'ajustement de paramètre d'activité est exécuté, en l'absence du premier type d'ajustement de paramètre d'activité pendant une première durée,
dans lequel le paramètre d'activité (1) est un facteur d'échelle pour la mise à l'échelle d'un facteur de gain prédéterminé où le produit du paramètre d'activité (1) et le facteur de gain prédéterminé est proportionnel à un niveau de changement d'un degré d'ouverture (V1 ; V2) de la soupape (300), et
dans lequel le premier type d'ajustement de paramètre d'activité est une diminution (70) du paramètre d'activité (1), et le deuxième type d'ajustement de paramètre d'activité est une augmentation (90) du paramètre d'activité (1).
